# EUROPEAN PATENT APPLICATION

(11) **EP 1 168 836 A2**
(43) Date of publication of application: **02.01.2002**
(21) Application number: 01401478.1
(22) Date of filing: 05.06.2001
(51) Int. Cl.: H04N 5/45

(54) **Dynamic control of image enhancement**

(30) Priority: 23.06.2000 US 603173
(71) Applicant: Thomson Licensing S.A., 92648 Boulogne Cedex (FR)
(72) Inventor: Allender, Jeffery Owen, Morristown, IN 46161 (US); Yost, Thomas Dale, Indianapolis, IN 46268 (US)
(74) Representative: Rossmanith, Manfred, Dr.

(57) **Abstract**

A method for controlling video peaking in a video display apparatus operable to display first (Ymain) and second image (Ypip) signal simultaneously. The method comprises the steps of combining the first (Ymain) and second image (Ypip) signals to form a simultaneous display signal (301); and independently controlling the video peaking in accordance with each of the first (Ymain) and second (Ypip) images combined to form the simultaneous display signal (301).

## Description

This invention relates to image enhancement systems and more particulary to the dynamic control of image enhancement during multiple image display.

### BACKGROUND OF THE INVENTION

It is well known that the sharpness of a displayed picture can be enhanced by peaking certain spatial frequencies of the displayed signal and, or, by modulating the scanning velocity of the display electron beam. Typically, spatial frequency peaking is performed by a circuit arrangement which changes the amplitudes of certain spatial frequencies without altering their relative phase relationships. Such peaking can be achieved with a cosine equalizer or transversal filter. With scanning velocity modulation, a derivative of the luminance portion of the display signal is employed to vary the velocity of the scanning beam. Slowing the scanning beam causes a greater number of electrons to land at a particular point in the displayed image causing a brightening of the display at that particular image location. Conversely, accelerating the scanning velocity at a particular point in the displayed image results in a darkening of the display. Thus, horizontal rate edges are visually enhanced by the variation of display intensity about the edge thus making the rise time of the edge appear steeper or sharper.

With the convergence of television and computer displays, so called multimedia monitors provide the ability to display images from multiple sources, such as, conventional NTSC, high definition television as defined by the Advanced Television System Committee (ATSC) standards as well as various computer image formats. This array of display signal sources represent a range of differing scanning frequencies and spatial frequency content. Put simply, high definition television has more lines and greater spatial frequency content, and thus is sharper than a conventional NTSC signal. Hence, this range of display signal formats introduces significant display complexity in, for example, the areas of multifrequency time base generation and synchronization, high voltage generation, and sharpness or image enhancement.

Complexity resulting from the range of signal sources is further complicated when the multimedia monitor simultaneously displays images from multiple, differing sources. The simultaneous display of multiple images is known as picture in picture or PIP or alternatively picture out of picture POP. A special implementation of POP is a side by side display of pictures comparable in size, and by implication, resolution or apparent sharpness. In addition, on screen messages are employed for user setup, control, or indication. However, because these computer generated messages are formed within the display device their representative signals are not subject to the bandwidth constraints or frequency response losses suffered by signals originated external to the display, for example NTSC or ATSC broadcast signals. Hence, to prevent unnecessary display enhancement, which likely results in image distortion of such OSD messages, it is known to inhibit enhancement during the occurrence of an OSD message.

Clearly a PIP or POP display with images of different scanning frequencies requires that scanning frequency conversion is implemented to enable the simultaneous display by PIP or POP. Furthermore, it can be appreciated that such displays with converted images from different scanning rate sources inevitably are of different signal bandwidth with spatial frequency content that differs from the main picture. Hence this suggests that the PIP or POP display format will receive less than optimum image enhancement when subject to a peaking or sharpening arrangement optimized for the typical spatial frequency content occurring with a single input or specific signal format.

### SUMMARY OF THE INVENTION

In an inventive method, display image sharpness is controlled in a video display apparatus operable to display first and second images simultaneously. The method comprises the steps of; combining the first and second images to form a simultaneous display; and independently controlling the sharpness in accordance with each of said first and second images combined to form the simultaneous display.

In a further inventive arrangement, display image sharpness is dynamically controlled in accordance with the sources of the displayed images forming the simultaneous display.

In another inventive arrangement, display image sharpness is dynamically controlled in accordance with the spectral frequency content of the sources forming the simultaneous display.

### BRIEF DESCRIPTION OF THE DRAWINGS

FIGURE 1A depicts a simultaneous display of multiple pictures having a picture in picture arrangement.
FIGURE 1B depicts a simultaneous display of multiple pictures having a picture out of picture, side by side arrangement.
FIGURE 2 is a block diagram showing an inventive display signal processing arrangement to form a simultaneous display with video peaking and scanning beam velocity modulation.
FIGURE 3A is a diagram depicting the variation of a peaking with input signal amplitude in a typical enhancement arrangement.
FIGURE 3B is a diagram depicting the variation of a peaking with input signal amplitude in an inventive enhancement arrangement.
FIGURE 4 is a block diagram showing an inventive dynamically controlled video peaking arrangement.
FIGURES 5A, B and C show impulse and amplitude frequency responses for the inventive dynamically controlled video peaking arrangement of FIGURE 4.
FIGURE 6 is a schematic diagram of an scanning velocity modulation arrangement with dynamic control of SVM signal amplitude.

### DETAILED DESCRIPTION

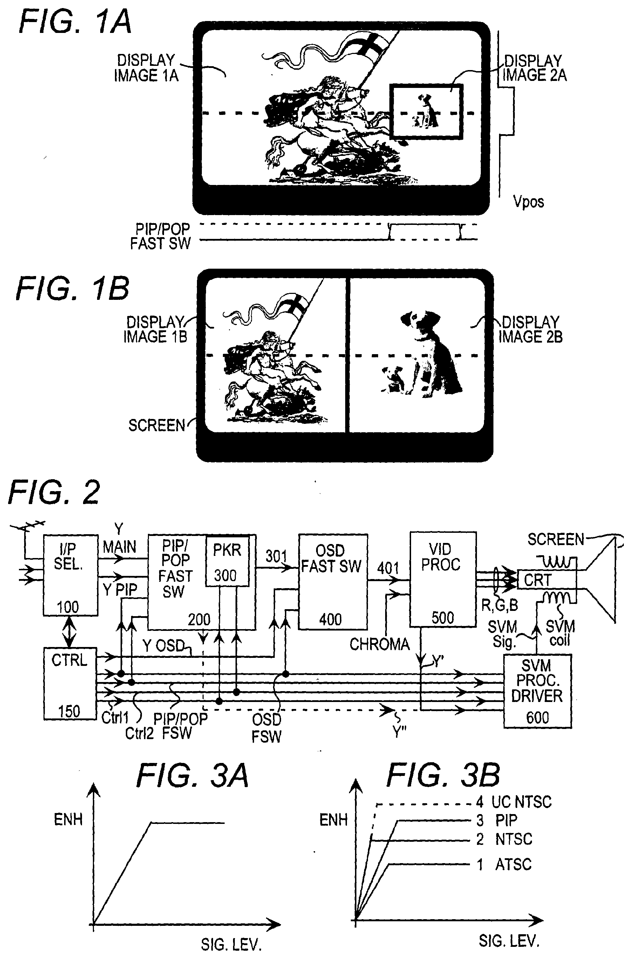

FIGURE 1A depicts an exemplary wide screen display apparatus, for example having a 16:9 aspect ratio, and showing a simultaneous display of two input picture sources having a picture in picture arrangement. The generation of a picture in picture or PIP arrangement is well known. However, in simple terms a picture in picture is formed by effectively cutting a hole in the main picture, which in exemplary FIGURE 1A is St George slaying a dragon. The hole is then filled with a significantly smaller picture, for example the dogs. The switching signal is shown adjacent to the vertical and horizontal edges of FIGURE 1A, in actuality the switching signal PIP/POP FSW or fast switch is only present for part of the vertical scan, as indicated by the indicator Vpos, which determines the vertical location.

The small image forming the PIP may be generated by a variety of well known methods, for example by so called electronic speed up where the image is time compressed horizontally by reading from a memory at a rate higher than its writing speed. The image width may also be reduced by deleting and or interpolating groups of pixels. In addition various combinations of deletion, interpolation and speedup can be employed. The vertical inserted picture dimension may be reduced by deleting or interpolating groups of lines to achieve the desired inserted picture height. Clearly which ever method is selected to reduce the size of the inserted picture, the spatial frequency content of the inserted picture or PIP will be significantly altered. For example, if electronic speed up is used to reduce the PIP image width by an exemplary 80%, i.e. the PIP is to occupy 1/5 of the screen width, the resulting spatial frequency content of the minified image will have been up converted by five times. Hence an ATSC picture source with a modest horizontal resolution of 25 MHz will result in a PIP image with spectral frequency components of 125 MHz. Although such frequency components can be generated, processed and coupled for display, it is doubtful that in such an up-converted image the phase relationships would be maintained to yield a smaller image with the same scene detail as the original picture. Furthermore such high speed processing may be precluded by cost considerations. Additionally the display screen structure, phosphor dot pitch, display viewing distance and human visual acuity will also contribute to diminished detail in the PIP image.

To minimize the up converted frequency content of a minified image it is usual to decimate, sub-sample or interpolate the PIP image signal to produce the minified image. This processing not only reduces the horizontal size but also reduces the spatial frequency content. To prevent the introduction of geometric distortion as the PIP image width is reduced the original aspect ratio must be maintained by reducing the PIP image height in accordance with the change in horizontal size. Hence, PIP image processing inherently reduces the spatial frequency content of the minified image in both horizontal and vertical directions resulting in a soft or un-sharp appearance. Although the minified image lacks detail it is capable of providing a useful indication of picture activity, for example the scoring of a goal or end of a commercial break. However, it can be appreciated that if an option allows the minified image to be increased in size, then the compromises employed for size and resolution reduction need to be reconsidered in order to display a PIP image with a useful but fuzzy picture content.

FIGURE 1B depicts an exemplary wide screen display apparatus showing a special implementation of picture out of picture or POP, where pictures of comparable size are presented side by side. Such side by side presentation allows direct image comparison with any resolution differences being quite apparent. Thus there is a requirement that the apparent sharpness of the two images be sufficiently similar, which by implication suggests that the two halves be similarly processed to yield comparable alterations in the picture detail.

As discussed previously, to maintain picture geometry and aspect ratio, the height must be changed in proportion to the width. However, in a side by side display the individual picture width may be altered by cropping and discarding the edges of each image. For example, in FIGURE 1B the left and right edges of each image have been removed such that the combined POP width fills the screen. Thus strips of one quarter the picture width are removed from each edge of each picture. The individual picture height remains unchanged however, thus although no geometrical image distortion has resulted, the image aspect ratio has been altered from an exemplary 16:9 to 8:9.

In both FIGURES 1A and 1B a horizontal broken line is shown dissecting the screen picture, and as described previously a switching signal PIP/POP fast switch is shown illustrating the timed, or positional occurrence of the alternate picture material. In view of the potential for differential displayed image resolution alteration an inventive arrangement employs a combination of the exemplary fast switching signal and other signals indicative of display signal origin to dynamically control the displayed image enhancement in each picture part by control of either or both video signal peaking and scanning beam velocity modulation.

FIGURE 2 is a block diagram showing a display signal processing arrangement for the simultaneous display of at least two image sources with an advantageous dynamic control of video peaking and scanning beam velocity modulation specific to the image content of the display. The number of different input signal sources, for example ATSC, NTSC, computer (SVGA), DVD and VHS when combined with the possible simultaneous image displays of PIP, POP and side by side presentations can be optimally enhanced by use of multiple, for example 5, differing levels of enhancement at for example two selectable peaking frequencies. Furthermore specific image content may be beneficially enhanced by use of simultaneous peaking at both frequencies but with different contributions at each frequency, individually controlled to provide specific enhancement effects.

In addition simultaneous image displays may be further enhanced by controlled interaction between video signal peaking and scanning velocity modulation. In FIGURE 2 signal sources for display are input to the display apparatus via an input selection arrangement 100, which for example, may include tuners for NTSC and ATSC radio frequency signal reception, and or base band signal input from sources such as VCR, DVD, camera, computer, video games etc. Included within input selector 100 is digital video processing which performs picture size manipulation as required by user selection for example, PIP, PIP position and or size, POP position or side by side display. Associated with input signal source selector 100 is controller 150 which facilitates input or display signal selection and provides control and timing waveforms throughout the display apparatus. In particular controller 150 generates fast switching signals for PIP/POP insertion, and on screen display, OSD, messages and insertion signal OSD FSW.

The signal selector 100 is shown with output signals Y main and Y PIP which are coupled to block 200 where they are combined to form a simultaneous display signal. As described previously, the minified PIP, or POP image, is inserted into the main signal responsive to the timing, or position, of the PIP fast switch signal relative to the main luminance signal synchronization. Often video frequency peaking is implemented in the main signal path prior PIP signal insertion. However, in exemplary FIGURE 2 the combined main and PIP or POP Y image signal is coupled to an advantageous dynamically controlled video peaking circuit depicted as block 300 which is controlled to change peaking amounts during the active picture interval. The choice of input signal for advantageous dynamically controlled video peaking in no way effects the dynamic operation of the video peaking arrangement.

The peaked luminance signal 301 with the PIP or POP image combined is coupled for on screen display, OSD, message insertion in block 400. As described for PIP insertion, an OSD fast switch signal is used to position the insertion point of the on screen message. The OSD fast switch signal can blank or reduce the signal amplitude of the main signal being overwritten by the OSD message. However, if the main signal is reduced in video amplitude to produce a transparent effect behind the on screen message it is then advantageous to dynamically reduce or remove enhancement of the main signal for the duration of the OSD. Such dynamic control is facilitated by controller 150 which generates the OSD fast switch signal, controls the transparent OSD insertion and provides an additional dynamic control element to control signals Ctrl1 and Ctrl2 coupled to transversal filter 300.

Following screen message insertion the peaked luminance signal 401 is coupled to a video processor block 500 where display drive signals are formed. In the prior description only the luminance signal component has been discussed, however comparable image manipulation and minification processing is performed on the coloring signal components prior to coupling to video processor block 500 to form exemplary red green and blue image display signals. The image display signals are coupled to an exemplary cathode ray tube for display and further enhancement by modulation of the scanning beam velocity by an SVM coil located on the CRT neck responsive to high frequency components or the derivative of the luminance signal.

A scanning beam velocity modulation signal is formed from the luminance component of the display signal and is suitably processed to generate a current which is coupled to the SVM coil to perturb the scanning speed of the horizontal component of the deflection field. The SVM signal may be generated from a luminance component Y" formed prior to, or following luminance signal enhancement however, it is known to inhibit SVM enhancement during OSD and simultaneous image display. In FIGURE 2 however, the SVM signal is generated from a luminance component signal Y' within video processing block 500 subsequent to PIP and OSD insertion. The variety of image sources comprising the simultaneous image and their degree of enhancement, suggests that optimum SVM enhancement can be achieved by dynamic control of the SVM signal amplitude. Thus by deriving the SVM signal from the final, or display signal luminance, it is possible to dynamically control enhancement of the individual image parts comprising the actual display signal. For example, SVM enhancement may be varied by dynamic control of the SVM signal amplitude. With an exemplary PIP display comprising a computer derived main picture and an inserted broadcast PIP image, the SVM amplitude may be advantageously reduced by 6dB during the main picture with the SVM signal amplitude increased, or a 6dB reduction dynamically removed for the horizontal and vertical scanning duration of the PIP image insert.

FIGURE 3A is a diagram depicting the variation of video peaking or sharpening with input signal amplitude in a typical enhancement arrangement. Often peaking is inhibited below certain input signal amplitudes to prevent enhancement of low level noise and consequently low signal levels too. As has been described previously, because differing spatial frequency content occurs in a simultaneous image display, differing image enhancement characteristics are required to provide an optimized correction for each part of the simultaneous image. FIGURE 3B depicts an exemplary variation of a peaking amplitude, or sharpness effect, with input signal amplitude in an inventive arrangement. In FIGURE 3B various different signal sources are considered with a corresponding sharpness or enhancement characteristic. For example, an HDTV or ATSC signal source may contain spectral signal components in the range of 30 MHz hence image sharpening can be performed as in curve 1 to enhance a band or range of frequencies in excess of the usual image frequencies contained in an NTSC signal. Thus the ATSC curve is depicted with the lowest degree of image enhancement or sharpening. Conversely an NTSC signal source may be subjectively improved by significantly greater amounts of peaking, as depicted in curve 2, applied over a lower band of frequencies and possibly occurring at a lower video signal level. A PIP image is small and significantly reduced in sharpness, hence may benefit subjectively by enhancement of the signal components remaining in the minified picture part. Curve 3 depicts an empirically determined level of PIP image enhancement which provides a subjective improvement in sharpness if applied with a greater amplitude over a range of frequencies different from those selected for either NTSC or ATSC picture enhancement. Curve 4 depicts levels of enhancement which can be employed to sharpen an up converted NTSC signal source when presented as a PIP display.

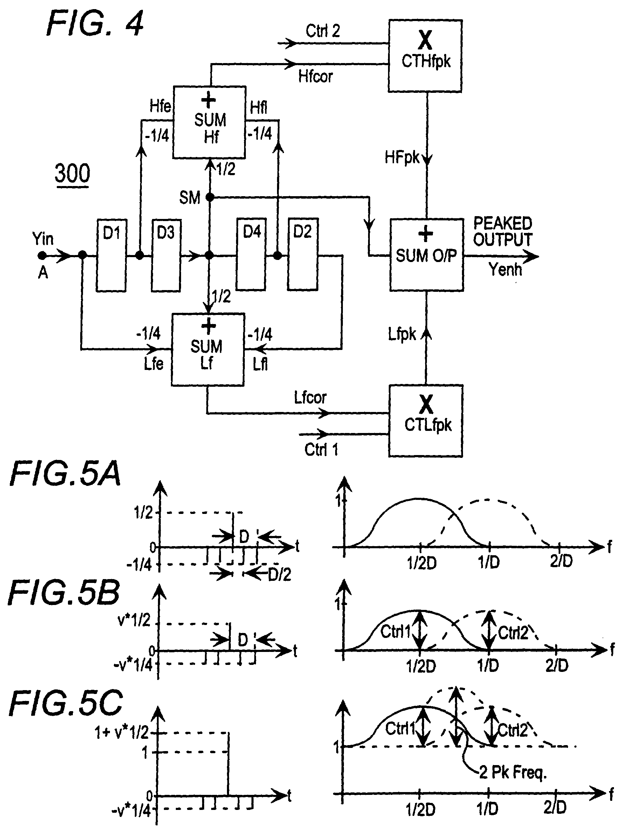

To facilitate the range of enhancement characteristics discussed with reference to FIGURE 3B an inventive dynamically controlled video peaking arrangement, shown in FIGURE 4, is employed. The block diagram shown in FIGURE 4 is illustrative of a peaking arrangement or transversal filter which can be implemented in analog form for use with base band video signals, analog delay lines and analog multipliers. Similarly a digital configuration may be used with digital representation of the video signals, digital shift registers and adders or multipliers. The function and control are substantially the same for either analog or digital circuit implementation. The transversal filter may, in simple terms, be considered to function as a peaking arrangement where the main signal SM is combined with inverted and attenuated time shifted versions of the input. Thus if the main signal SM is considered to be an impulse, it is augmented by leading and trailing echoes of the impulse, spaced in time by the duration of the delay paths. Thus the summation of inverted, attenuated and time shifted versions of the input signal may be thought of as contributing pre and post lobes to increase the perceived sharpness by reducing the apparent rise time of the impulse signal. FIGURES 5A, 5B and 5C illustrate the effect of the summation of the inverted pairs of echoes in both time and frequency domains. The transversal filter depicted in FIGURE 4 provides dynamically controlled peaking in two bands of frequencies with an amount of overlap or additional enhancement occurring in the overlapping band between the individual peaking frequencies. However, there is no requirement that the bands over lap or that the number of bands be limited to two. For example, in the peaker shown in FIGURE 4, delay elements D1 -D4 each have the same delay value, for example 74 nano seconds, which represents the period of an ITU 601 sampled signal. Thus maximum enhancement with signal HFpk occurs at approximately 13.5 MHz due to delay elements D3 and D4. The lower frequency enhancement signal LFpk peaks at 6.75 MHz due to the additive effect of D1 plus D3 and D2 plus D4. Similarly a delay value of 37 nano seconds will produce a high frequency correction peak at 27 MHz with a lower frequency peak at 13.5 MHz. The use of transversal filters with selectable multiple frequency bands is well known. For example, in a video and deflection processing integrated circuit for example Toshiba type TA1276N provides six different peaking frequencies which are selectably controlled via a serial data bus as typified by the I²C bus. Although the peaking frequency may be selected via the bus, simultaneous operation at two or more frequencies is not facilitated. Furthermore, the limited transmission speed of the I²C data bus, for example 400 Kb/s permits only static filter selection and user sharpness control manipulation. Such I²C data bus control precludes the dynamic control of peaking amount or frequency selection required to facilitate selective enhancement of the individual picture parts comprising a simultaneous PIP or POP image.

Clearly a digital filter implementation with delay elements provided by clocked devices more readily permits the construction of multifrequency filters than with analog signals and delay lines. Thus a digital signal processing embodiment provides greater flexibility for shaping the peaking characteristic to correct or enhance signals subject to other than gaussian shaped losses.

With reference to FIGURE 4, an analog or digital video signal is input at terminal A and is coupled to delay element D1 and via an inverter and attenuator, not shown, to provide an input signal with an amplitude of minus one quarter that of the input signal at summing device SUM Lf. The delayed main signal, HfE, is coupled to a second summing device SUM Hf and to a second delay element D3. Signal HfE, is coupled via an inverter and attenuator, not shown, to provide an input signal with an amplitude of minus one quarter that of the input signal at summing device SUM Hf. The output signal SM from delay element D3 is coupled to delay element D4 and to summer SUM O/P where enhancement signals HFpk and LFpk are added to form a peaked luminance output signal Yenh.

The output from delay D3 is attenuated, for example by one half, and coupled to summers Hf and Lf where respective correction signals Hf Cor and Lf cor are formed. From delay element D4 an output signal HfL is coupled as a third input to summing device SUM Hf, via an inverter and attenuator, not shown. Output signal HfL is also coupled to delay D2 which produces an output signal LfL for coupling through an inverter and attenuator, to form the third input to summing device SUM Lf. The output signals HfCor and LfCor from respective summers SUM Hf, and SUM Lf are each coupled to respective control devices CTHfpk and CTLfpk which are advantageously individually, dynamically controlled in amplitude by respective control signals Ctrl1 and Ctrl2.

The dynamic control signals are generated by controller 150 in response to the selected video image source, which is indicative of likely spatial frequency content, and the type of display presentation, i.e. normal, PIP or side by side. For example, an ATSC image signal may be enhanced by the addition of only amplitude controlled higher frequency signal components as represented by signal Hfpk. Whereas an NTSC signal may be optimally enhanced with the addition of lower frequency signal components Lfpk. Similarly PIP image content may require enhancement in both low and high frequency bands with an maximum enhancement occurring between the low and high frequency peaks, as illustrated in FIGURE 5C by the dashed curve annotated 2 Pk Freq. An up converted image derived from an exemplary NTSC source, although subject to a nominal 2:1 spatial frequency translation, is still significantly less sharp particularly when displayed side by side with an ATSC or computer generated image. Consequently the up converted image is enhanced in both low and high frequency bands to improve perceived sharpness and lessen visible differences.

Controller 150 generates the advantageous dynamic control signals Ctrl1 and Ctrl2 which are coupled to provide independent control of the high frequency and low frequency multipliers Hfpk, Lfpk respectively. For example, in a PIP display the fast switch signal determines the inserted location of the minified image, hence it can be used to advantageously control the degree of enhancement, and the frequency band or bands in which the spectral components of the PIP image will be enhanced. Selection between peaking frequency bands is achieved by means of the control signals Ctrl1 and Ctrl2, which, for example, when either is set for zero enhancement results in zero peaking at that peaking frequency. Clearly in a digital implementation of the transversal filter the fast switch signal (Fast Sw) can be represented by a digital word or words which change value in synchronism with the fast switch signal. Since controller 150 provides independent control of enhancement at each peaking frequency, certain simultaneous images may be optimally enhanced by dynamically and independently controlling the peaking frequency and enhancement amount. At image boundaries between the main and PIP or POP pictures, significant enhancement changes can occur which can potentially result in undesirable transitional peaking effects. Advantageously such undesirable peaking transitions are avoided by controlling the rate, or number of clock periods over which the control words assume the new value. In an analog system the fast switch signal would be filtered to produce a gradual, ramping change in enhancement effect at the PIP boundary.

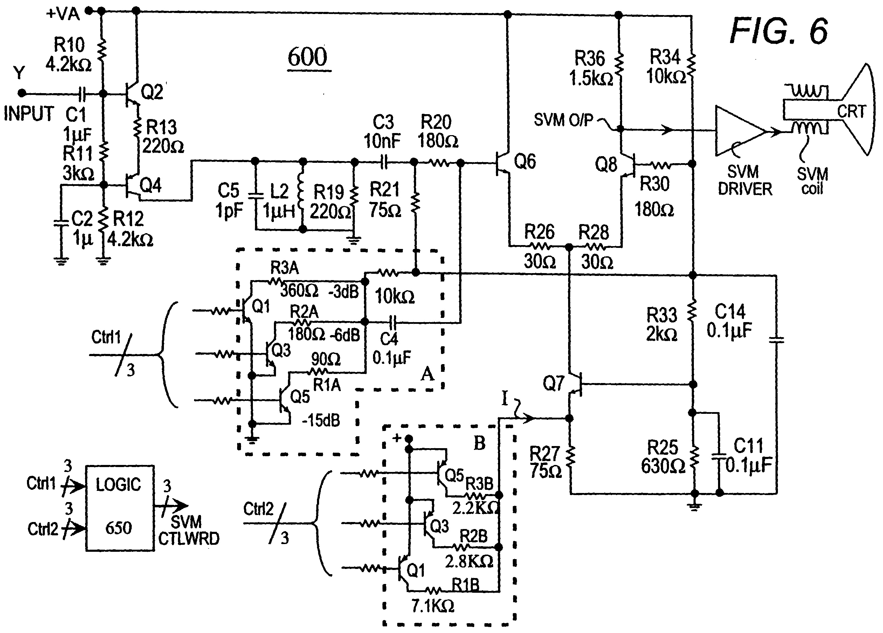

FIGURE 6 is a detailed circuit diagram showing an exemplary scanning velocity modulation (SVM) amplifier with advantageous dynamic control of SVM signal amplitude responsive to a digital control word. As described previously the sharpness of multiple images displayed simultaneously on a single screen can be optimized by dynamically controlling the degree of signal peaking or enhancement applied to each part of the picture. Typically, velocity modulated image enhancement is achieved by operating the SVM system within a limited range of input signal amplitudes to produce a sustained, maximized level of enhancement. The sustained SVM signal amplitude is usually controlled by peak to peak SVM signal limiting, often with negative feedback from the coil driver amplifier to prevent excessive power dissipation and by means of a feed forward signal for emissions prevention. However, in the exemplary arrangement shown in FIGURE 2, the SVM signal is derived from the enhanced simultaneous display signal hence an advantageous dynamic feed forward control signal is employed to control SVM signal amplitude and thereby prevent sustained or continuous peak to peak clipping of the SVM signal and probable SVM amplitude degeneration resulting from output power control.

As described previously the sharpness of multiple images displayed simultaneously on a single screen can be optimized by dynamically controlling the degree of peaking applied to each image component of the picture. Thus in an advantageous arrangement digital control bits are coupled to dynamically control the amplitude of the SVM signal applied to the SVM coil to produce optimized edge enhancement of the multiple image components.

As discussed with regard to the transversal filter, controller 150 generates a digital control word in response to the signal source selected for display together with the nature of the displayed image, for example, PIP, side by side or POP. The digital control word may for example comprise 3 bits for dynamically controlling SVM signal amplitude and hence the degree of SVM derived image enhancement. A luminance signal, Y is coupled via capacitor C1 to the base electrode of transistor Q2, which is configured as an emitter follower. A discussed previously this luminance input signal may be derived as signal Y' from video processor 500 or signal Y" formed in processing block 200. Resistors R10, R11 and R12 form a potential divider connected between power supply, +VA, and ground for determining the base voltages of transistors Q2 and Q4. The collector of transistor Q2 is connected to power supply, +VA, typically 24 volts, and the emitter is coupled via resistor R13 to the emitter electrode of a grounded base amplifier formed by transistor Q4. The base electrode of transistor Q4 is connected to the junction of resistors R11 and R12 and is decoupled ground by capacitor C2.

The amplified luminance signal at the collector of transistor Q4 is differentiated by a parallel connected network connected between the collector and ground comprising a capacitor C5, inductor L2 and damping resistor R19. The differentiated luminance or SVM signal from the collector of transistor Q4 is coupled via capacitor C3 and resistor R20 to the base of transistor Q6 which together with transistor Q8 form a differential amplifier. A resistor R21 is coupled to the junction of capacitor C3 and resistor R20 to bias the base of transistor Q6 to the same potential as that of transistor Q8. The gain of the differential amplifier is set by resistors R26 and R28, R36 and the collector current from current source transistor Q7. Resistors R25, R33 and R34 form a potential divider that provides biasing voltages for transistors Q6, Q7, and Q8, where transistor Q6 is biased via resistors R20 and R21 and transistor Q8 is biased via resistor R30. The junction of resistors R21, R30, R33 and R34 is decoupled to ground by capacitor C14. Similarly capacitor C11 decouples the junction of resistors R25 and R33 to ground. The collector electrode of Q6 is directly connected to supply voltage +VA. An amplified and amplitude controlled SVM signal is developed at the collector of transistor Q8 across resistor R36 which is coupled to supply voltage +VA. The SVM signal is coupled to a power amplifier (SVM DRIVER) which generates a current in the SVM coil to affect velocity modulation of the horizontal component of the scanning electron beam.

Block 650 shows the formation of an SVM control word from control signals Ctrl1 and Ctrl2 which can be combined and coupled to an exemplary digital to analog converter for example, as depicted within dashed boxes A and B. The digital to analog converter shown in box A includes transistor switches Q1, Q3, Q5. Each transistor switch is driven to saturated conduction by a positive logic level, for example, +5 volts which corresponds to a logical 1 state. When any one of the transistor switches is saturated an AC potential divider is formed at the base of transistor Q6 by the series combination of ones of transistor switches, Q1, Q3, Q5 respectively, collector load resistors R1A R2A and R3A, DC blocking capacitor C4 and resistor R20. When the SVM control word has a logical zero value, for example as represented by a zero voltage value, the transistor switches are turned off and no AC potential division occurs at the the input of the differential amplifier. In this way a digital control word is converted to an analog signal attenuation value which determines the SVM signal amplitude and hence the degree of picture sharpening.

In a second embodiment, depicted within dashed box B, an SVM control word can be formed from control signals Ctrl1 and Ctrl2 for example by block 650, and coupled to a digital to analog converter, for example, as depicted by transistor switches Q1, Q3, Q5. Each transistor can generate a current amplitude in proportion to respective collector resistors R1B, R2B and R3B. These digitally determined currents are summed to form current I. When the data bits have a zero volt, or logical zero value, a maximum current I is conducted from a 5 volt positive supply. With data bits having a value of nominally 5 volts or logical 1, the transistor switches are turned off and no digitally controlled currents are generated.

The digitally derived currents forming current I are coupled to the junction of resistor R27 and the emitter of current source transistor Q7. The other end of resistor R27 is connected to ground. The collector of transistor Q7 is coupled to the junction of resistors R26 and R28 which determine the gain in the differential amplifier. As current I from the digital to analog converter increases, the voltage at the emitter of transistor Q7 increases. The increase in emitter voltage causes the base emitter potential of the transistor to be reduced which in turn reduces the collector current. Thus as the current supplied to the differential amplifier is varied in response to the value represented by the data word coupled to the digital to analog converter, so too is the SVM output signal amplitude and thus the resulting degree of image enhancement. The variation of source current in the differential amplifier provides dynamic control the gain or amplitude of the SVM signal. Thus, the SVM signal amplitude and resulting enhancement is controlled in response to digital value derived for each picture part of the displayed image.

## Claims

1. A method for controlling video peaking in a video display apparatus operable to display first image signal (Ymain) and second image signal (Ypip) simultaneously, comprising the steps of:
a) combining said first (Ymain) and second (Ypip) image signals to form a simultaneous display signal (301); and,
b) independently controlling said video peaking arrangement (300) in accordance with each of said first (Ymain) and second (Ypip) image signals combined to form said simultaneous display signal (301) for display by said video display apparatus (CRT).

2. The method according to claim 1, comprising a further step of:
generating respective control signals (Ctrl1, Ctrl2) for said video peaking arrangement (300) in accordance with a spatial position of images representing said first and second image signals on a screen of said video display apparatus (CRT).

3. The method according to claim 1, comprising a further step of:
selecting a first control value for said video peaking of said first image signal (Ymain) having a value different from a second control value for said video peaking of said second image signal (Ypip).

4. The method according to claim 1, wherein said combining step comprises a further step of:
selecting said first image signal (Ymain) to form a majority of said display on said screen and selecting said second image signal (Ypip) to form a minority of said display on said screen.

5. The method according to claim 1, comprising a further step of:
controlling video peaking of said simultaneous display signal by peaking video spectral components comprising said first and second image signals (Ymain, Ypip) forming said display on said screen.

6. The method according to claim 1, comprising a further step of:
controlling video peaking of display on said screen by peaking video spectral components comprising said first and second image signals (Ymain, Ypip) independently and with different peaking frequencies.

7. A video display apparatus operable to display first and second image signals simultaneously, comprising:
a cathode ray tube (CRT) for image display;
a video amplifier (200) combining first and second image signals (Ymain, Ypip) to form a simultaneous display signal (301,401) for image display; and,
a video peaking circuit (300, 600) coupled to said amplifier (200) and said cathode ray tube (CRT) for enhancing a display image representing said simultaneous display signal (301, 401) coupled for image display by said cathode ray tube (CRT), wherein a peaking effect is dynamically controlled responsive to an occurrence in said simultaneous display signal (301, 401) of each one of said first and second image signals (Ymain, Ypip).

8. A video display apparatus operable to display first and second images simultaneously, comprising:
a cathode ray tube (CRT) for image display;
a video amplifier (200) combining first and second image signals (Ymain, Ypip) to form a simultaneous display signal (301, 401); and,
a peaking circuit (600) coupled to said amplifier (200) and said cathode ray tube (CRT) for enhancing a display image (1A/2A, 1B/2B) representing said simultaneous display signal (301, 401) coupled for display by said cathode ray tube,
wherein a peaking frequency is dynamically controlled responsive to an occurrence of each one of said first and second image signals forming said display image (1A/2A, 1B/2B).

9. A video display apparatus operable to display first and second image signals simultaneously, comprising:
a cathode ray tube (CRT) for image display;
a video amplifier (200) combining first and second image signals (Ymain, Ypip) to form a simultaneous display signal (301, 401); and,
a peaking circuit (600) coupled to said amplifier (200) and said cathode ray tube (CRT) for enhancing a display image (1A/2A, 1B/2B) representing said simultaneous display signal (301, 401) coupled for display by said cathode ray tube,
wherein peaking frequency selection and level of enhancement are independently controlled responsive to an occurrence of each one of said first and second image signals (Ymain, Ypip) forming said display image (1A/2A, 1B/2B).

10. The video display apparatus of claim 9, where in accordance with said occurrence of each one of said first and second image signals (Ymain, Ypip) forming said display image, a control signal determines said level of enhancement during display image parts (1A, 2A, 1B, 2B) representing of said first and second image signals (Ymain, Ypip).

11. The video display apparatus of claim 10, wherein said level of enhancement is changed between non-zero values during an active interval of a horizontal display period.

12. The video display apparatus of claim 9, wherein a control signal selects between first and second peaking frequencies responsive to an occurrence of display image parts (1A, 2A, 1B, 2B) representing each of said first and second image signals (Ymain, Ypip) forming said display image (1A/2A, 1B/2B).

13. The video display apparatus of claim 12, wherein said selection of said peaking frequencies occurs during an active interval of a horizontal display period.

14. The video display apparatus of claim 9, wherein a control signal selects first and second peaking frequencies for enhancing said simultaneous display signal (301, 401) responsive to an occurrence of one of said first and second image signals (Ymain, Ypip) forming said display image (1A/2A, 1B/2B).

15. The video display apparatus of claim 9, where in accordance with said occurrence of each one of said first and second image signals (Ymain, Ypip) forming said simultaneous display signal (301, 401), a control signal selects a first peaking frequency during an occurrence of said first image signal (Ymain)in said simultaneous display signal (301, 401) and a second peaking frequency during an occurrence of said second image signal (Ypip) in said simultaneous display signal (301, 401).

16. A video display apparatus operable to display first and second images simultaneously, comprising:
a cathode ray tube (CRT) for image display;
a video amplifier (200) combining first and second image signals (Ymain, Ypip) to form a simultaneous display signal (301, 401); and,
an enhancement circuit (300) coupled to said amplifier (200) and said cathode ray tube (CRT) for enhancing said simultaneous display signal (301, 401) coupled for display by said cathode ray tube (CRT), said enhancement circuit (300) having first and second peaking frequencies with individual control of enhancement amount,
wherein said first image signal (Ymain) forming said simultaneous display signal (301, 401) causes a first control signal value to generate a first amount of enhancement at said first frequency and said second image signal (Ypip) causes said first control signal value to generate a second amount of enhancement at said first frequency and a second control signal value to generate a first amount of enhancement at said second frequency.

17. The video display apparatus of claim 16, wherein said first control signal value is constrained to change value in a series of steps.

18. The video display apparatus of claim 16, wherein said first and second control signals are constrained to change values in a series of steps.
